Europäisches Patentamt

European Patent Office

Office européen des brevets

(19)

(11) **EP 1 104 908 A1**

(12) **EUROPEAN PATENT APPLICATION**

(43) Date of publication:
**06.06.2001   Bulletin 2001/23**

(51) Int Cl.7: **G06K 9/00**, H01L 27/148

(21) Application number: **99123762.9**

(22) Date of filing: **30.11.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **Lsi Card Corporation**<br>**Osaka 556-0005 (JP)** | (72) Inventor: **Ohki, Sinji, c/o LSI Card Corporation**<br>**Osaka 556-0005 (JP)**<br><br>(74) Representative: **Dallmeyer, Georg, Dipl.-Ing. et al**<br>**Patentanwälte**<br>**Von Kreisler-Selting-Werner**<br>**Bahnhofsvorplatz 1 (Deichmannhaus)**<br>**50667 Köln (DE)** |

(54)   **Optical apparatus, fingerprint pickup apparatus and fingerprint pickup method**

(57)     In a fingerprint pickup apparatus which irradiates light to a finger bulb put on a light-transmissible surface so as to obtain a fingerprint image by receiving the reflected light of the irradiation light by a CCD through a lens mechanism, the lens mechanism has a focal length in such a manner that an error in length due to parallax from the center of the finger bulb is maintained smaller than a pixel pitch of the CCD or smaller than half the pixel pitch thereof. The light-transmissible surface corresponds with the surface of a trigonal prism which is in contact with a pentagonal prism.

FIG. 2

**Description**

The present invention relates to an optical apparatus, particularly to a fingerprint pickup apparatus and a fingerprint pickup method for obtaining fingerprint images in a fingerprint checking system for utilizing fingerprints so as to identify individual persons.

In recent years, as information systems have developed and have been used generally in the society, problems have arisen as to how to protect security of information that has been accumulated in individual systems themselves and computers. With respect to methods for ensuring such security, for example, security systems, which utilize a person checking system that discriminates whether or not a certain person is allowed to enter a room by checking an ID card or a password number when the person enters the room, have been used.

However, in such a person checking system, discrimination is made only depending on whether or not the ID card or the password number is correct; therefore, this system fails to cope with cases in which these are used illicitly, resulting in problems in ensuring security. For this reason, there have been ever-increasing demands for methods for identifying individual persons based upon individual persons' inherent characteristics.

Here, since fingerprints are inherent to individual persons and unchanged for all their lives, utilizing fingerprints for identifying individual persons provides a very effective method. Therefore, research and developing efforts have been concentrated on fingerprint checking systems for identifying individual persons by checking their fingerprints.

For example, in the case when such a fingerprint checking system is used for managing persons' entrance and leaving to and from a building or a room, first, fingerprint information of specific users has been preliminarily registered, and every time a person enters or leaves the building or room, the person's fingerprint information is detected, and the detected fingerprint information is compared with fingerprint information that has been registered; thus, if these are coincident with each other, the person is identified as a right user.

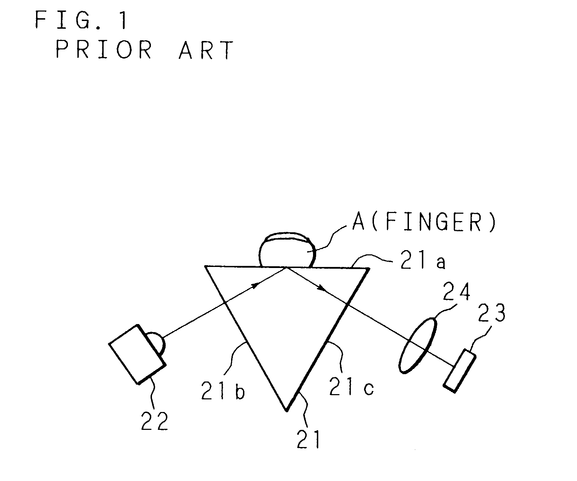

In such a fingerprint checking system, in order to obtain a correct result of the checking, fingerprint information of the persons has to be detected correctly, that is, a fingerprint pickup apparatus which can provide correct fingerprint images is required. FIG. 1 is a schematic view that shows such a conventional fingerprint pickup apparatus.

As illustrated in FIG. 1, this fingerprint pickup apparatus is provided with a trigonal prism 21, a light source 22 for radiating light, a CCD (Charge Coupled Device) 23 for forming a fingerprint image and for converting it into an electric signal, and a lens 24 for allowing the CCD 23 to form the fingerprint image. The prism 21 has a first side surface 21a, a second side surface 21b and a third side surface 21c, and a finger A the image of which is picked up is put in contact with this first side surface 21a.

Light from the light source 22 is made incident on the second side surface 21b of the prism 21 in a direction orthogonal thereto, and irradiated onto the finger A in its contact state onto the first side surface 21a; thus, on the concavo-convex surface of the fingerprint, since the convex portions are in contact with the first side surface 21a, the incident light is not subject to total reflection on these portions, resulting in dark portions. In contrast, at the concave portions, which are not in contact with the first side surface 21a, the incident light is subject to total reflection, resulting in bright portions. As a result, an image of the fingerprint with emphasized contrast is formed on the first side surface 21a. The fingerprint image is released through the third side surface 21c of the prism 21, and allowed to form the image on the CCD 23 through the lens 24.

In the conventional fingerprint pickup apparatus, a lens with a high refractive index having a short focal length is often used in order to shorten the optical path length and consequently to miniaturize the construction. When the optical path length is shortened, an error in length due to parallax from the center of the object (an error in length between the center portion and the circumferential portion), that is, an error in length occurs due to the difference in angles between a perpendicular line passing through the center point of the object and the direction of the eye. Moreover, when the lens with a high refractive index having a short focal length is used, it is highly possible that an error occurs in length due to aberration of the lens. Since the fingerprint information is data indicating the characteristic points of a fingerprint (such as end points and branch points), the occurrence of an error due to parallax tends to cause difficulties in obtaining accurate fingerprint information. Therefore, in order to eliminate such influence of parallax, improvements, such as the installation of two cylindrical lenses and the utilization of polarization processes, have been made; however, these improvements require special optical members, resulting in a problem of bulky apparatuses.

BRIEF SUMMARY OF THE INVENTION

One of the objectives of the present invention is to provide an optical apparatus, a fingerprint pickup apparatus and a fingerprint pickup method which can eliminate influence of parallax without the need for installing any special optical members.

Another objective of the present invention is to provide an optical apparatus and a fingerprint pickup apparatus which are miniaturized in their entire constructions even in the case when in order to eliminate the influence of parallax, an inexpensive lens with a low refractive index is used so as to lengthen the optical path length.

In the optical apparatus (fingerprint pickup apparatus) of the present invention having an arrangement in which light is irradiated to an object (a finger bulb) that is put in contact with a light-transmissible surface and the reflected light derived from the light irradiation is received by a CCD through a lens mechanism so that an object image (a fingerprint image) is obtained, the lens mechanism has a focal length in such a manner that an error in length due to parallax from the center of the object (the finger bulb) is maintained smaller than the pixel pitch of the CCD or smaller than half the pixel pitch of the CCD.

In such an optical apparatus (a fingerprint pickup apparatus) of the present invention, for example, a first trigonal prism having a side surface with which the object (the finger bulb) is put in contact and a second pentagonal prism having one side surface that contacts one of the other side surfaces of the first prism are installed, and the reflected light is further reflected by the rest one side surface of the first prism and the rest four side surfaces of the second prism respectively, and then made incident on the CCD through the lens mechanism.

In the optical apparatus (the fingerprint pickup apparatus), it is supposed to have an error in length due to parallax from the center of the object (the finger bulb) and an error in length due to lens aberration. However, in the case of a lens mechanism having a considerable focal length, the aberration is almost negligible. Therefore, in the optical apparatus (the fingerprint pickup apparatus) of the present invention, the focal length of the lens mechanism is set in such a manner that the error in length due to parallax from the center of the object (the finger bulb) is maintained smaller than the distance between adjacent pixels in the CCD or smaller than half the distance thereof. With this arrangement, even if there is influence due to parallax, an object image (a fingerprint image) that is to enter a predetermined pixel is allowed to enter the right pixel; thus, it is possible to always obtain a correct object image (fingerprint image) free from distortion in length.

In the case of the application of a lens with a low refractive index so as to eliminate the influence of parallax, the optical path length inevitably becomes long, resulting in a bulky apparatus. In the optical apparatus (the fingerprint pickup apparatus) of the present invention, in order to eliminate such a possibility, two types of prisms are combined so that a longer optical path length is provided by allowing these prisms to make a plurality of reflections. Therefore, even if a long optical path length is provided, it is possible to miniaturize the entire construction.

When monochromatic light is used as light to be irradiated to the finger bulb, it is possible to eliminate influences of aberration occurring at the time of using mixed color light.

The above and further objects and features of the invention will more fully be apparent from the following detailed description with accompanying drawings.

BRIEF DESCRIPTION OF THE SEVERAL VIEWS OF THE DRAWINGS

FIG. 1 is a schematic drawing that shows the construction of a conventional fingerprint pickup apparatus.

FIG. 2 is a schematic drawing that shows the construction of one example of a fingerprint pickup apparatus of the present invention.

FIG. 3 is a schematic drawing that shows the optical path and mirror images in the fingerprint pickup apparatus of the present invention.

FIG. 4 is a schematic drawing that shows the distance relationship between a CCD and an image-pickup object.

FIG. 5 is a schematic drawing that shows the construction of another example of a fingerprint pickup apparatus of the present invention.

DETAILED DESCRIPTION OF THE INVENTION

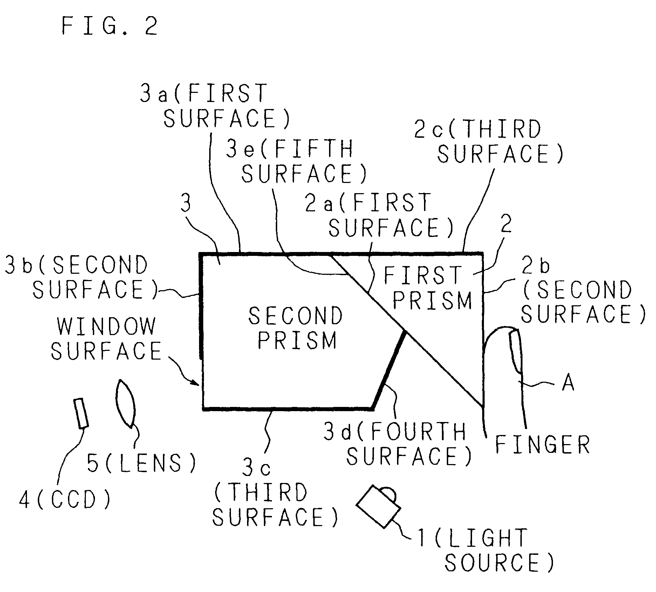

Referring to Figures, the following description will discuss embodiments of the present invention in detail. FIG. 2 is a schematic drawing that shows the construction of a fingerprint pickup apparatus of the present invention.

The fingerprint pickup apparatus of the present invention is provided with: a light source 1 such as a LED for radiating monochromatic red light, two kinds of first and second prisms 2 and 3, a two-dimensional CCD 4 for forming a fingerprint image and converting it into an electric signal, and a lens 5 with a low refractive index for allowing the CCD 4 to form the fingerprint image.

The first prism 2 is a trigonal prism whose bottom surface is substantially shaped into an isosceles right triangle, and has three side surfaces (shown counterclockwise starting with the first surface 2a, to the second surface 2b and the third surface 2c in the Figure). The width of the first surface 2a is the widest, and the widths of the second surface 2b and the third surface 2c are substantially the same. The second surface 2b and the third surface 2c are orthogonal to each other. Here, the third surface 2c has a reflection coating thereon so as to form a mirror finished surface.

The second prism 3 is a pentagonal prism whose bottom surface is shaped into a pentagon with the adjacent two inner angles being set at right angles, and has five side surfaces (shown counterclockwise starting with the first surface 3a, to the second surface 3b, third surface 3c, fourth surface 3d and fifth surface 3e in the Figure). The first surface 3a and the second surface 3b, as well as the second surface 3b and the third surface 3c, are respectively orthogonal to each other, and the first surface 3a and the third surface 3c are parallel to each other. The third surface 3c is wider in width than the first surface 3a. The fifth surface 3e, which forms an obtuse angle (135 degrees) with the first surface 3a, and the fourth surface 3d, which forms an obtuse angle with the third surface 3c, are located at positions facing the second surface 3b. Here, each of the first surface 3a, the third surface 3c and the fourth surface 3d has a reflection coating thereon so as to form an entirely mirror finished surface. The second surface 3b has a partial reflection coating so as to form a mirror finished surface on a portion at the first surface 3a side, and the other portion at the third surface 3c side does not have a reflection coating, thereby forming a window surface. Moreover, the refractive index of the second prism 3 is smaller than the refractive index of the first prism 2.

The first prism 2 and the second prism 3 having the above-mentioned structures are formed into an integral part in a mode as described below. A portion of the first surface 2a of the first prism 2 and the entire portion of the fifth surface 3e of the second prism 3 are in contact with each other. The second surface 2b of the first prism 2 and the second surface 3b of the second prism 3 are in parallel with each other, and the third surface 2c of the first prism 2 is flush with the first surface 3a of the second prism 3.

The light source 1 is disposed so as to radiate monochromatic red light with such directivity as to orthogonal to the first surface 2a of the first prism 2. Moreover, the lens 5 and the CCD 4 are arranged so that light released from the window surface of the second surface 3b of the second prism 3 is made incident thereon.

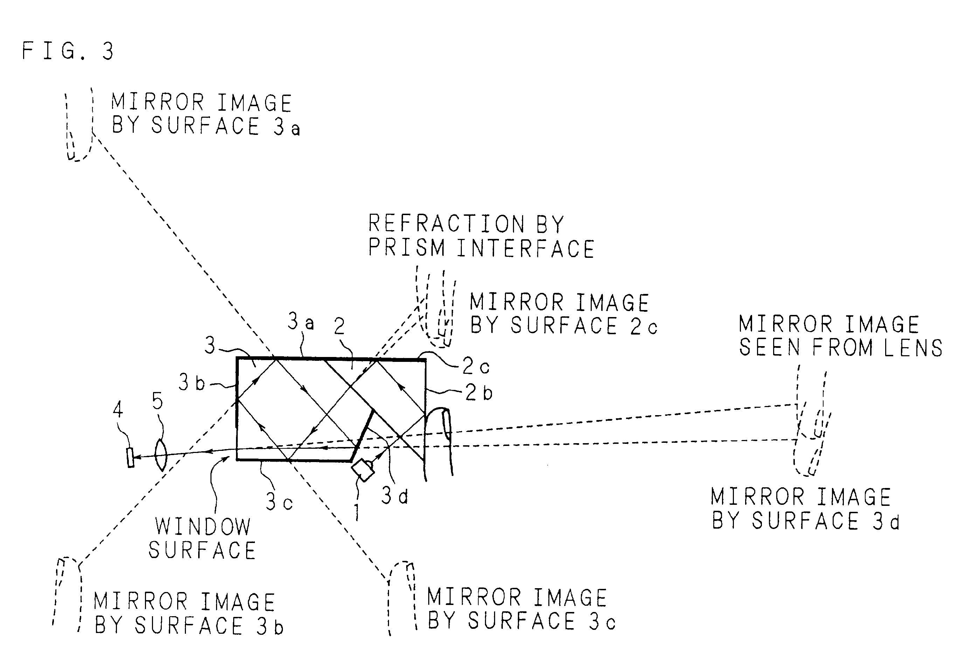

Next, an explanation will be given of the operation of a fingerprint pickup apparatus having such an optical system. FIG. 3 is a drawing that shows optical paths in this fingerprint pickup apparatus and mirror images derived from the first and second prisms 2 and 3.

A finger A, which is a fingerprint pickup recognition object, is put with its finger bulb (fingerprint portion) in contact with the second surface 2b of the first prism 2. The monochromatic red light from the light source 1 is made incident onto the first prism 2 in a manner so as to be orthogonal to the first surface 2a of the first prism 2, and totally reflected from the second surface 2b of the first prism 2 on which the finger is put. At this time, at the convex portions of the concavo-convex surface of the fingerprint that are in contact with the second surface 2b, the incident light is not subject to total reflection so that these portions appear dark. On the other hand, at the concave portions that are not in contact with the second surface 2b, the incident light is subject to total reflection so that these portions appear bright. As a result, an image of the fingerprint with emphasized contrast is formed.

The reflected light of the second surface 2b is reflected by the third surface 2c of the first prism 2, and then refracted by the contact surface between the first surface 2a of the first prism 2 and the fifth surface 3e of the second prism 3, and the resulting light is allowed to enter the second prism 3. Inside the second prism 3, the light is reflected by the third surface 3c, and then successively reflected by the second surface 3b, the first surface 3a and the fourth surface 3d, and released outside from the window surface of the second surface 3b. The monochromatic light representative of the fingerprint image is converged onto the CCD 4 by the lens 5 so that the fingerprint image is formed on the CCD 4. Then, the CCD 4 converts the fingerprint image into an electric signal.

In the present invention, the lens 5 with a low refractive index is used so as to eliminate the influence of parallax, with the result that it is necessary to lengthen the distance (optical path length) from the position of the finger A to the CCD 4. And, the lens 5 has the focal length in such a manner that an error in length due to parallax is maintained within the distance between the adjacent pixels of the CCD 4 or within half the distance thereof.

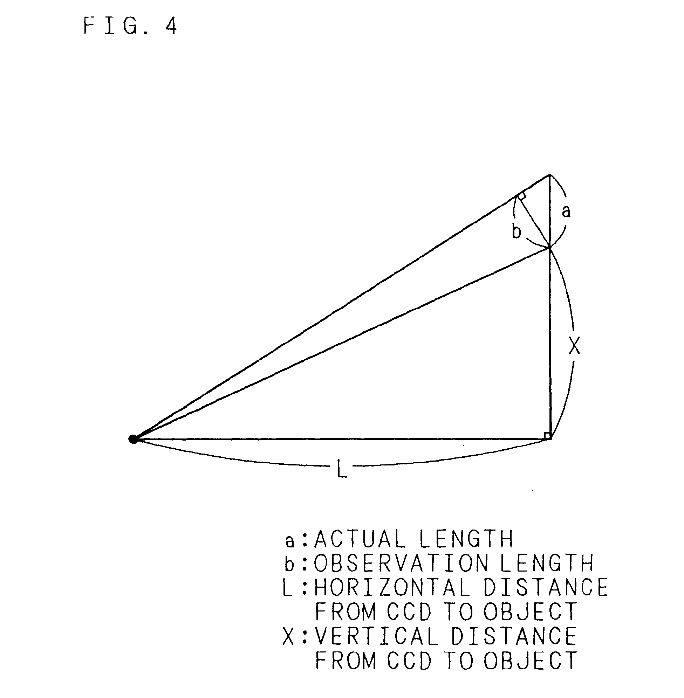

Here, consideration is given to the relationship between the error in length due to parallax and the distance (optical path length) from the CCD 4 to the object (finger). FIG. 4 is a schematic drawing that shows the positional relationship between the CCD and the object. In FIG. 4, a is an actual length, b is an observation length, L is a horizontal distance from the CCD to the object, and X is a vertical distance from the CCD to the object. Here, the ratio a/b of the actual length a and the observation length b is represented by the following equation (1):

$$a/b$$

$$= (a^2 - [\{L^2 + (X+a)^2\}^{\frac{1}{2}} - \{L^2 + X^2\}^{\frac{1}{2}}]^2)^{\frac{1}{2}} \tag{1}$$

In the case when the pickup area is 2.7 mm and a CCD having a resolution of 512 pixels is used, supposing that the error range in length is set at 5.4μm that is the distance between the adjacent pixels (2.7 mm/512), the allowable error range of length distortion is maintained within 0.2 % of 5.4μm / 2.7 mm. Moreover, when the error range in length is set at 2.7μm that is half the distance between the adjacent pixels (2.7mm/512), the allowable error range of length distortion is maintained within 0.1% of 2.7μm / 2.7 mm.

When the error was calculated by setting the above-mentioned X within 15 mm with L being set within 240 mm, the results are shown in the following Tables 1 and 2:

Table 1

| X \ L | 10 | 20 | 30 | 40 | 50 | 100 | 120 | 140 |
|---|---|---|---|---|---|---|---|---|
| 1 | 1.10% | 0.28% | 0.12% | 0.07% | 0.04% | 0.01% | 0.01% | 0.01% |
| 2 | 2.98% | 0.77% | 0.35% | 0.19% | 0.12% | 0.03% | 0.02% | 0.02% |
| 4 | 8.79% | 2.44% | 1.11% | 0.63% | 0.40% | 0.10% | 0.07% | 0.05% |
| 8 | 23.78% | 7.96% | 3.79% | 2.18% | 1.41% | 0.36% | 0.25% | 0.18% |
| 9 | 27.48% | 9.67% | 4.66% | 2.71% | 1.76% | 0.45% | 0.31% | 0.23% |
| 10 | 31.01% | 11.46% | 5.61% | 3.28% | 2.13% | 0.55% | 0.38% | 0.28% |
| 11 | 34.36% | 13.30% | 6.62% | 3.89% | 2.54% | 0.65% | 0.46% | 0.34% |
| 12 | 37.51% | 15.19% | 7.69% | 4.55% | 2.99% | 0.77% | 0.54% | 0.40% |
| 14 | 43.21% | 19.03% | 9.96% | 5.99% | 3.96% | 1.03% | 0.72% | 0.53% |
| 15 | 45.77% | 20.95% | 11.16% | 6.76% | 4.48% | 1.18% | 0.82% | 0.61% |

(Length unit: mm)

Table 2

| X \ L | 160 | 180 | 190 | 200 | 210 | 220 | 230 | 240 |
|---|---|---|---|---|---|---|---|---|
| 1 | 0.00% | 0.00% | 0.00% | 0.00% | 0.00% | 0.00% | 0.00% | 0.00% |
| 2 | 0.01% | 0.01% | 0.01% | 0.01% | 0.01% | 0.01% | 0.01% | 0.01% |
| 4 | 0.04% | 0.03% | 0.03% | 0.03% | 0.02% | 0.02% | 0.02% | 0.02% |
| 8 | 0.14% | 0.11% | 0.10% | 0.09% | 0.08% | 0.07% | 0.07% | 0.06% |
| 9 | 0.18% | 0.14% | 0.12% | 0.11% | 0.10% | 0.09% | 0.09% | 0.08% |
| 10 | 0.21% | 0.17% | 0.15% | 0.14% | 0.12% | 0.11% | 0.10% | 0.10% |
| 11 | 0.26% | 0.20% | 0.18% | 0.16% | 0.15% | 0.14% | 0.12% | 0.11% |
| 12 | 0.30% | 0.24% | 0.22% | 0.19% | 0.18% | 0.16% | 0.15% | 0.14% |
| 14 | 0.41% | 0.32% | 0.29% | 0.26% | 0.24% | 0.22% | 0.20% | 0.18% |
| 15 | 0.47% | 0.37% | 0.33% | 0.30% | 0.27% | 0.25% | 0.23% | 0.21% |

(Length unit: mm)

Taking it into consideration that the allowable error range is within 0.2 %, it is found that a correct fingerprint image is not obtained within a range of 10 mm from the origin unless the distance L is not less than 180 mm. Moreover, taking it into consideration that the allowable error range is within 0.1%, it is found that a correct fingerprint image is not obtained within a range of 10 mm from the origin unless the distance L is not less than 210 mm.

As described above, in order to eliminate the distortion in length due to parallax, a longer optical path length is required. When such a long optical path length is linearly installed, the entire structure of the apparatus becomes long and bulky, resulting in inconvenience. Therefore, in the present invention, the two prisms 2 and 3 are combined together as described above so as to reflect light a plurality of times by using the side surfaces thereof; thus, a long optical path length is achieved even with a small-size apparatus construction.

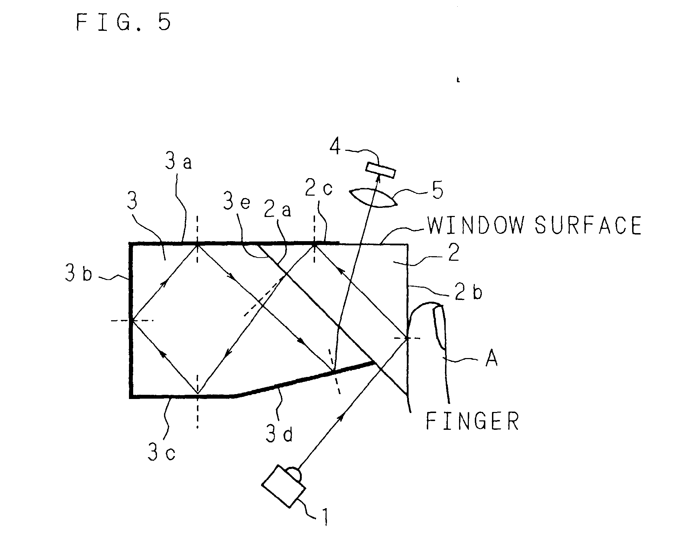

FIG. 5 is a schematic drawing that shows the structure of another example of a fingerprint pickup apparatus of the present invention. In FIG. 5, those members that are the same as FIG. 2 are indicated by the same reference numerals. In the structural example shown in FIG. 5, the angle formed by the third surface 3c and the fourth surface 3d of the second prism 3 is set wider as compared with the above-mentioned example, so that the reflected light of the first surface 3a is reflected by the fourth surface 3d toward the first prism 2 side. A portion (at the first surface 2a side) of the third surface 2c of the first prism 2 is provided as a mirror finished surface and the rest of the portion (at the second surface 2b side) is provided as a window surface, while the second surface 3b of the second prism 3 is provided as a mirror surface over its entire portion. Here, the position of the light source 1 is the same as the above-mentioned example; however, the lens 5 and the CCD 4 are arranged so that light released from the window surface of the third surface 2c of the first prism 2 is made incident thereon.

With respect to the optical path of the monochromatic light, the same operations as the above-mentioned example are carried out from the radiation of the monochromatic light from the light source 1 to the reflection by the first surface 3a of the second prism 3. The reflected light of the first surface 3a is further reflected by the fourth surface 3d, and then refracted by the contact surface between the fifth surface 3e of the second prism 3 and the first surface 2a of the first prism 2, and the resulting light is allowed to enter the first prism 2, and then released outside from the window surface of the third surface 2c. Then, the monochromatic light representative of the fingerprint image is converged onto the CCD 4 by the lens 5 so that the fingerprint image is formed on the CCD 4.

In this example, the installation positions of the CCD 4 and the lens 5 are different from those of the above-mentioned example; thus, as compared with the above-mentioned example, it is possible to shorten the apparatus in the direction perpendicular to the second surface 2b (the second surface 3b).

In the present invention, the monochromatic red light is used as the irradiation light. Therefore, it is possible to eliminate the influence of chromatic aberration that is a problem with the application of mixed color light as the light source. Here, instead of red light, other monochromatic color lights may of course be used.

In addition, the shapes of the two prisms 2 and 3 only give examples, and any desired shapes may be used as long as a longer optical path is provided by allowing light to be reflected by their side surfaces a plurality of times. Moreover, a prism having a single structure may be used as long as it allows a plurality of reflections on its side surfaces.

In addition, the above description is explained for a fingerprint pickup apparatus which obtains a fingerprint image of finger bulb, however, in the case where pickup object other than finger bulb is used, the present invention can he applied.

As described above, in the optical apparatus of the present invention, the lens mechanism has the focal length in such a manner that an error in length distortion due to parallax is set within a predetermined range in accordance with the pixel pitch of the CCD; therefore, it becomes possible to eliminate the influence of parallax without the need for installing any special optical members.

Moreover, since two kinds of prisms are combined so as to lengthen the optical path length by allowing the prisms to make a plurality of reflections, it is possible to miniaturize the entire apparatus construction even in the case when a lens with a low refractive index is used with a resulting long optical path.

Furthermore, the application of a monochromatic light as the irradiation light makes it possible to eliminate the influence of chromatic aberration.

**Claims**

1. An optical apparatus, which comprises: a light-transmissible body (2, 3); a light source (1) for irradiating light to an object (A) put on said light-transmissible body (2, 3); a lens mechanism (5) for converging the light irradiated and reflected by said light-transmissible body (2, 3) so as to form an image; and a CCD (4) for converting the converged image to an electric signal,

   characterized by that said lens mechanism (5) has a focal length in such a manner that an error in length due to parallax from the irradiation position at said light-transmissible body (2, 3) is maintained smaller than a pixel pitch of said CCD (4).

**2.** An optical apparatus, characterized by comprising:

a light-transmissible body (2, 3) having a plurality of surfaces (2b, 2c, 3a, 3b, 3c, 3d);
a light source (1) for irradiating light to an object (A) put on one (2b) of said plurality of surfaces (2b, 2c, 3a, 3b, 3c, 3d);
a lens mechanism (5) for converging the light irradiated and reflected by said one surface (2b) and by at least one (2c, :3c, 3b, 3a, 3d) of the rest of said plurality of surfaces (2b, 2c, 3a, 3b, 3c, 3d) so as to form an image; and
a CCD (1) for converting the converged image to an electric signal,

and characterized by that said lens mechanism (5) has a focal length in such a manner that an error in length due to parallax from the irradiation position at the one surface (2b) is maintained smaller than a pixel pitch of said CCD (1).

**3.** An optical apparatus, characterized by comprising:

a first trigonal prism (2) including a first side surface (2a), a second side surface (2b) and a third side surface (2c) ;
a second pentagonal prism (3) including one side surface (3e) with which the first side surface (2a) of said first prism (2) is in contact;
a light source (1) for irradiating light to an object (A) put on the second side surface (2h) of said first prism (2);
a lens mechanism (5) for converging the light irradiated and reflected by the second and third side surfaces (2b, 2c) of said first prism (2) and by the rest four side surfaces (3c, 3b, 3a, 3d) of said second prism (3) so as to form an image; and
a CCD (4) for converting the converged image to an electric signal,

and characterized by that said lens mechanism (5) has a focal length in such manner that an error in length due to parallax from the irradiation position at the second side surface (2b) of said first prism (2) is maintained smaller than a pixel pitch of said CCD (4).

**4.** An optical apparatus, which comprises: a light-transmissible body (2, 3); a light source (1) for irradiating light to an object (A) put on said light-transmissible body (2, 3); a lens mechanism (5) for converging the light irradiated and reflected by said light-transmissible body (2, 3) so as to form an image; and a CCD (4) for converting the converged image to an electric signal,
characterized by that said lens mechanism (5) has a focal length in such a manner that an error in length due to parallax from the irradiation position at said light-transmissible body (2, 3) is maintained smaller than half a pixel pitch of said CCD (4).

**5.** An optical apparatus, characterized by comprising:

a light-transmissible body (2, 3) having a plurality of surfaces (2b, 2c, 3a, 3b, 3c, 3d);
a light source (1) for irradiating light to an object (A) put on one (2b) of said plurality of surfaces (2b, 2c, 3a, 3b, 3c, 3d);
a lens mechanism (5) for converging the light irradiated and reflected by said one surface (2b) and by at least one (2c, 3c, 3b, 3a, 3d) of the rest of said plurality of surfaces (2b, 2c, 3a, 3b, 3c, 3d) so as to form an image; and
a CCD (4) for converting the converged image to an electric signal,

and characterized by that said lens mechanism (5) has a focal length in such manner that an error in length due to parallax from the irradiation position at the one surface (2b) is maintained smaller than half a pixel pitch of said CCD (1).

**6.** An optical apparatus, characterized by comprising:

a first trigonal prism (2) including a first side surface (2a), a second side surface (2b) and a third side surface (2c) ;
a second pentagonal prism (3) including one side surface (3e) with which the first side surface (2a) of said first prism (2) is in contact;
a light source (1) for irradiating light to an object (A) put on the second side surface (2b) of said first prism (2);
a lens mechanism (5) for converging the light irradiated and reflected by the second and third side surfaces (2h, 2c) of said first prism (2) and by the rest four side surfaces (3c, 3b, 3a, 3d) of said second prism (3) so as to form an image; and

a CCD (4) for converting the converged image to an electric signal,

and characterized by that said lens mechanism (5) has a focal length in such a manner that an error in length due to parallax from the irradiation position at the second side surface (2b) of said first prism (2) is maintained smaller than half a pixel pitch of said CCD (4).

7. The optical apparatus according to any one of claims 1 to 6,
   wherein said light source (1) is alight source which radiates monochromatic light.

8. A fingerprint pickup apparatus for irradiating light to a finger bulb (A) put on a light-transmissible surface (2h) and for obtaining a fingerprint image by receiving the reflected light of the irradiation light by a CCD (4) through a lens mechanism (5),
   characterized by that said lens mechanism (5) has a focal length in such a manner that an error in length due to parallax from the center of the finger bulb (A) is maintained smaller than a pixel pitch of said CCD (4).

9. A fingerprint pickup apparatus for irradiating light to a finger bulb (A) put on a light-transmissible surface (2b) and for obtaining a fingerprint image by receiving the reflected light of the irradiation light by a CCD (4) through a lens mechanism (5),
   characterized by that said lens mechanism (5) has a focal length in such a manner that an error in length due to parallax from the center of the finger bulb (A) is maintained smaller than half a pixel pitch of said CCD (4).

10. A fingerprint pickup apparatus for obtaining a fingerprint image of a finger bulb (A), characterized by comprising:

    a first trigonal prism (2) including one side surface (2b) on which the finger bulb (A) is put as an image pickup object;
    a second pentagonal prism (3) including one side surface (3e) with which one of the other side surfaces (2a) of said first prism (2) is in contact;
    a light source (1) for irradiating light to the finger bulb (A) through said first prism (2);
    a lens mechanism (5) for converging and forming a fingerprint image obtained by the light irradiation; and
    a two-dimensional CCD (4) for converting the converged fingerprint image to an electric signal, and characterized by that said lens mechanism (5) has a focal length in such a manner that an error in length due to parallax from the center of the finger bulb (A) is maintained smaller than a pixel pitch of said CCD (4), and the reflected light of one side surface (2b) of said first prism (2) derived from the light irradiation is reflected by the rest one side surface (2c) of said first prism (2) and by the rest four side surfaces (3c, 3b, 3a, 3d) of said second prism (3) respectively, and then made incident on said CCD (4) through said lens mechanism (5).

11. A fingerprint pickup apparatus for obtaining a fingerprint image of a finger hulh (A), characterized by comprising:

    a first trigonal prism (2) including one side surface (2h) on which the finger bulb (A) is put as an image pickup object;
    a second pentagonal prism (3) including one side surface (3e) with which one of the other side surfaces (2a) of said first prism (2) is in contact;
    a light source (1) for irradiating light to the finger bulb (A) through said first prism (2);
    a lens mechanism (5) for converging and forming a fingerprint image obtained by the light irradiation; and
    a two-dimensional CCD (4) for converting the converged fingerprint image to an electric signal, and characterized by that said lens mechanism (5) has a focal length in such a manner that an error in length due to parallax from the center of the finger bulb (A) is maintained smaller than half a pixel pitch of said CCD (4), and the reflected light of one side surface (2b) of said first prism (2) derived from the light irradiation is reflected by the rest one side surface (2c) of said first prism (2) and by the rest four side surfaces (3c, 3b, 3a, 3d) of said second prism (3) respectively, and then made incident on said CCD (4) through said lens mechanism (5).

12. The fingerprint pickup apparatus according to any one of claims 8 to 11,
    wherein said light source (1) is a light source which radiates monochromatic light.

13. A fingerprint pickup method for obtaining a fingerprint image of a finger bulb (A), characterized by comprising the steps of:

irradiating light to the finger bulb (A) put on a light-transmissible surface (2b);
converging the reflected light of the irradiation light by a lens mechanism (5) so as to form an image; and
converting the converged fingerprint image to an electric signal by using a CCD (4),

and characterized by that the focal length of said lens mechanism (5) is set in such a manner that an error in length due to parallax from the center of the finger bulb (A) is maintained smaller than a pixel pitch of said CCD (1).

14. A fingerprint pickup method for obtaining a fingerprint image of a finger bulb (A), characterized by comprising the steps of:

irradiating light to the finger bulb (A) put on a light-transmissible surface (2b);
converging the reflected light of the irradiation light by a lens mechanism (5) so as to form an image; and
converting the converged fingerprint image to an electric signal by using a CCD (1),

and characterized by that the focal length of said lens mechanism (5) is set in such a manner that an error in length due to parallax from the center of the finger bulb (A) is maintained smaller than half a pixel pitch of said CCI) (4).

15. A fingerprint pickup method for obtaining a fingerprint image of a finger bulb (A), characterized by comprising the steps of:

irradiating light to the finger bulb (A) put on one side surface (2b) of a first trigonal prism (2);
allowing the reflected light of the one side surface (2b) of said first prism (2) derived from the light irradiation to be reflected by one of the other side surfaces (2c) of said first prism (2) and by four side surfaces (3c, 3b, 3a, 3d) of a second pentagonal prism (3) including the rest one side surface (:3e) that is in contact with the rest one side surface (2a) of said first prism (2), respectively;
converging the reflected light by a lens mechanism (5) so as to form an image; and
converting the converged fingerprint image to an electric signal by using a CCU (4), and

characterized by that the focal length of said lens mechanism (5) is set in such a manner that an error in length due to parallax from the center of the finger bulb (A) is maintained smaller than a pixel pitch of said CCD (4).

16. A fingerprint pickup method for obtaining a fingerprint image of a finger hulh (A), characterized by comprising the steps of:

irradiating light to the finger bulb (A) put on one side surface (2b) of a first trigonal prism (2);
allowing the reflected light of the one side surface (2b) of said first prism (2) derived from the light irradiation to he reflected by one of the other side surfaces (2c) of said first prism (2) and by four side surfaces (3c, 3b, 3a, 3d) of a second pentagonal prism (3) including the rest one side surface (3e) that is in contact with the rest one side surface (2a) of said first prism (2), respectively;
converging the reflected light by a lens mechanism (5) so as to form an image; and
converting the converged fingerprint image to an electric signal by using a CCD (4), and

characterized by that the focal length of said lens mechanism (5) is set in such a manner that an error in length due to parallax from the center of the finger bulb (A) is maintained smaller than half a pixel pitch of said CCD (4).

17. The fingerprint pickup method according to any one of claims 13 to 16,
wherein the light irradiated to the finger bulb (A) is monochromatic light.

FIG. 1
PRIOR ART

A(FINGER)

21a

24
23

21b        21c

22

21

FIG. 2

FIG. 3

MIRROR IMAGE
BY SURFACE 3a

REFRACTION BY
PRISM INTERFACE

MIRROR IMAGE
BY SURFACE 2c

MIRROR IMAGE
SEEN FROM LENS

3a   2

3

3b                                    2c
                                      2b
4   5

3c   1   3d

MIRROR IMAGE
BY SURFACE 3d

WINDOW
SURFACE

MIRROR IMAGE
BY SURFACE 3b

MIRROR IMAGE
BY SURFACE 3c

EP 1 104 908 A1

12

FIG. 4

a:ACTUAL LENGTH
b:OBSERVATION LENGTH
L:HORIZONTAL DISTANCE
  FROM CCD TO OBJECT
X:VERTICAL DISTANCE
  FROM CCD TO OBJECT

FIG. 5

WINDOW SURFACE

FINGER

**European Patent Office**

**EUROPEAN SEARCH REPORT**

Application Number

EP 99 12 3762

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 1999, no. 05, 31 May 1999 (1999-05-31) -& JP 11 031216 A (OLYMPUS OPTICAL CO LTD), 2 February 1999 (1999-02-02) * abstract; figures 1,2 * | 1-17 | G06K9/00 H01L27/148 |
| A | WO 93 11631 A (VLSI VISION LTD) 10 June 1993 (1993-06-10)  * page 12, line 4 - page 13, line 17 * * figure 3 * | 1-6, 8-11, 13-16 | |
| A | WO 96 17480 A (DIGITAL BIOMETRICS INC) 6 June 1996 (1996-06-06) * page 1, line 4 - line 20 * * page 3, line 18 - page 4, line 37 * * page 9, line 2 - line 16 * * abstract; figures 1,2,4 * | 1-17 | |
| A | DE 195 09 751 A (EINIGHAMMER HANS J DR) 19 September 1996 (1996-09-19) * column 1, line 28 - line 57 * * column 2, line 43 - column 4, line 44 * * figures 1A,2 * | 1-17 | TECHNICAL FIELDS SEARCHED (Int.Cl.7) G06K H01L |
| A | DE 198 16 428 A (FUJITSU LTD) 4 March 1999 (1999-03-04) * column 1, line 54 - column 2, line 1 * * column 5, line 4 - column 11, line 31 * * abstract; figures 1-20 * | 1-17 | |
| A | US 5 625 448 A (RANALLI ELISEO ET AL) 29 April 1997 (1997-04-29)  * column 4, line 1 - column 6, line 53 * * figures 3-5 * | 3,6,7, 10-12, 15-17 | |

-/--

The present search report has been drawn up for all claims

| Place of search | Date of completion of the search | Examiner |
|---|---|---|
| MUNICH | 19 April 2000 | Narganes-Quijano, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## European Patent Office

### EUROPEAN SEARCH REPORT

Application Number

EP 99 12 3762

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 616 295 A (HAHN BIOMETRIX GMBH I G) 21 September 1994 (1994-09-21) * column 1, line 5 – line 40 * * column 3, line 7 – line 29 * * column 4, line 13 – line 22 * * figure 1 * | 1-17 | |

TECHNICAL FIELDS
SEARCHED        (Int.Cl.7)

The present search report has been drawn up for all claims

| Place of search | Date of completion of the search | Examiner |
|---|---|---|
| MUNICH | 19 April 2000 | Narganes-Quijano, F |

EPO FORM 1503 03.82 (P04C01)

EP 1 104 908 A1

**ANNEX TO THE EUROPEAN SEARCH REPORT
ON EUROPEAN PATENT APPLICATION NO.**                    EP 99 12 3762

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2000

| Patent document cited in search report | | Publication date | Patent family member(s) | | Publication date |
|---|---|---|---|---|---|
| JP 11031216 | A | 02-02-1999 | NONE | | |
| WO 9311631 | A | 10-06-1993 | GB | 2276512 A,B | 28-09-1994 |
| WO 9617480 | A | 06-06-1996 | AU | 4142596 A | 19-06-1996 |
| | | | BR | 9509933 A | 30-11-1999 |
| | | | CA | 2207664 A | 06-06-1996 |
| | | | CN | 1167556 A | 10-12-1997 |
| | | | EP | 0795248 A | 17-09-1997 |
| | | | JP | 10510075 T | 29-09-1998 |
| | | | NO | 972448 A | 25-07-1997 |
| DE 19509751 | A | 19-09-1996 | NONE | | |
| DE 19816428 | A | 04-03-1999 | JP | 11083459 A | 26-03-1999 |
| US 5625448 | A | 29-04-1997 | US | 5548394 A | 20-08-1996 |
| EP 0616295 | A | 21-09-1994 | DE | 4304605 C | 31-03-1994 |
| | | | AT | 178420 T | 15-04-1999 |